# EUROPEAN PATENT APPLICATION

(11) **EP 2 464 180 A1**
(43) Date of publication of application: **13.06.2012**
(21) Application number: 11009362.2
(22) Date of filing: 25.11.2011
(51) Int. Cl.: H04W 60/02

(54) **Apparatus and method for updating a location in a wireless access system**

(30) Priority: 07.12.2010 US 420749 P; 12.10.2011 KR 20110104311
(71) Applicant: LG Electronics Inc., Yeongdeungpo-gu Seoul 150-721 (KR)
(72) Inventor: Park, Giwon, Anyang, Gyeonggi-Do (KR); Yuk, Youngsoo, Anyang, Gyeonggi-Do (KR); Kim, Jeongki, Anyang, Gyeonggi-Do (KR); Ryu, Kiseon, Anyang, Gyeonggi-Do (KR); Lee, Jin, Anyang, Gyeonggi-Do (KR)
(74) Representative: Gunzelmann, Rainer

(57) **Abstract**

The present disclosure relates to a method of allowing a terminal to perform a location update in an idle mode in a wireless access system, and the method may include receiving, from a base station, a machine-to-machine (M2M) terminal specific idle mode timer; and performing a location update based on the received M2M terminal specific idle mode timer, wherein the M2M terminal specific idle mode timer represents length of the maximum interval between location update while the terminal is in idle mode.

## Description

### BACKGROUND OF THE INVENTION

### 1. Field of the invention

The present disclosure relates to a wireless access system, and more particularly, to a method and apparatus for performing a location update in an idle mode.

### 2. Description of the related art

### M2M communication (machine type communication; MTC)

Hereinafter, machine-to-machine (M2M) communication (or machine type communication (MTC)) will be described in brief.

Machine-to-machine (M2M) communication may denote communication between an electronic device and an electronic device as its expression. In other words, M2M communication may denote communication between objects. In general, M2M communication may denote wired or wireless communication between electronic devices or communication between a human-controlled device and a machine, but it may be also used as a meaning of particularly referring to wireless communication between an electronic device and an electronic device, namely, between machines. M2M terminals used in a cellular network may have lower performance or capability than that of typical terminals.

A lot of terminal may exist within a cell, and those terminal may be distinguished from one another based on its type, class, service, and the like.

For example, based on their operation type, terminals may be largely classified into a human type communication (HTC) terminal and a machine type communication (MTC) terminal. The machine type communication (MTC) may include communication between M2M terminals. Here, human type communication (HTC) may denote the transmission and reception of signals for which the transmission of signals is determined by a human, whereas MTC may denote the transmission of signals triggered by itself or event occurrence in each terminal or periodically without the intervention of a human.

Furthermore, if machine-to-machine (M2M) communication (or machine type communication (MTC)) is taken into consideration, then the number of whole terminals may suddenly increase. M2M terminal may have the following features based on support services.
1. A lot of terminal within a cell
2. Low amount of data
3. Transmission of low frequency (may have periodicity)
4. Limited number of data characteristics
5. Insensitive to time delay
6. Having low mobility or fixed

Furthermore, M2M communication may be used in various fields, such as protected access and surveillance, pursuit and discovery, public safety (emergency situation, disaster), payment (vending machine, ticket machine, parking meter), health care, remote control, smart meter, and the like.

### Idle mode

Hereinafter, an idle mode in a HTC environment will be described in brief.

Idle mode is a mechanism capable of periodically receiving a downlink broadcast message without registering with a specific base station even when a terminal wanders in a wireless link environment having a plurality of base stations over a wide region.

Idle mode is a state in which only downlink synchronization is carried out to suspend all normal operations as well as handover (HO), and receive a paging message which is a broadcast message only for a predetermined interval. Paging message is a message for indicating paging action to a terminal. For example, the paging action may include ranging operation, network reentry, and the like.

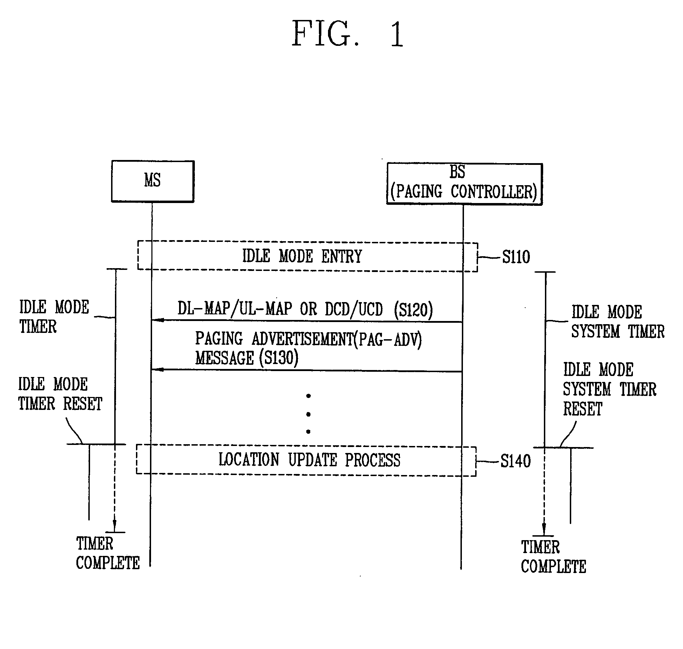

FIG. 1 is a flow chart illustrating the operation of an idle mode terminal.

Idle mode may be initiated by a terminal or initiated by a base station. In other words, the terminal may transmit a deregistration request (DREG-REQ) message to the base station, and receive a deregistration response (DREG-RSP) message in response to the deregistration request (DREG-REQ) message, thereby entering an idle mode. Furthermore, the base station may transmit a deregistration request (DREG-REQ) message or deregistration command (DREG-CMD) to the terminal, thereby entering an idle mode.

Referring to FIG. 1, the terminal is deregistered by the base station, and enters an idle mode (S110). The base station may be a paging controller. If the paging controller is a separate network entity, then the base station transmits and/or receives information to and/from the paging controller over a paging network. If an idle mode is initiated, then the paging controller operates an idle mode system timer.

The idle mode system timer indicates a maximum time during which the paging controller can store idle mode retaining information. The terminal operates an idle mode timer corresponding to the idle mode system timer.

During the listening interval, the terminal receives a DL-MAP/UL-MAP message and a DCD/UCD message (S120). The terminal decodes the DL-MAP message and DCD message to decode a paging message, and synchronize them with the downlink of a preferred base station. The DCM message may include a paging group identifier (ID) for identifying a paging group to which the base station belongs.

During the listening interval, the terminal receives a BS broadcast paging (PAG-ADV) message which is a paging message (S130). Here, the PAG-ADV message indicates a paging action to be carried out by the terminal.

An idle mode terminal may perform a location update for updating the terminal's own location information stored in the paging controller. Here, the location update may be triggered by the base station or triggered by the terminal. In other words, the idle mode terminal performs a location update due to various reasons (S140).

The idle mode terminal may perform a timer based location update, a paging group location update, a power down location update, a MBS zone update, and the like.

The timer based update may perform a location update when a network reentry is not carried out by receiving a paging message prior to expiring an idle mode timer.

The paging group based update may perform a location update when the terminal is moved to another paging group.

The power down update may perform a location update prior to the power down of the terminal.

The MBS zone update may perform a location update when the terminal is moved to another MBS zone.

If the location update is successfully carried out, then the idle mode timer, and idle mode system timer may be reset. If the idle mode system terminal is expired, then the paging controller may delete idle mode retaining information stored therein, and suspend a paging related control for the relevant terminal. If the idle mode timer is expired, then the terminal may regard that the paging controller has deleted idle mode retaining information.

### SUMMARY OF THE INVENTION

In an HTC environment, the terminal may perform a location update when network reentry to the base station is not carried out subsequent to receiving a paging message from the base station prior to the expiration of a timer value according to a idle mode timer value. Furthermore, in an HTC environment, an idle mode timer value may be determined and used as a global variable.

However, since machine type communication (MTC) is different from human type communication (HTC) in communication features as described above, the location update process of MTC differentiated from HTC may be required in case of a location update in an idle mode.

Accordingly, an object of the present disclosure is to provide a method of performing an idle mode location update in an MTC environment.

According to the present disclosure, there is provided a method of allowing a terminal to perform a location update in an idle mode in a wireless access system, the method may include receiving, from a base station, a machine-to-machine (M2M) terminal specific idle mode timer; and performing a location update based on the received M2M terminal specific idle mode timer, wherein the M2M terminal specific idle mode timer represents length of the maximum interval between location update while the terminal is in idle mode.

Furthermore, the method may be characterized in that the step of performing a location update periodically performs a location update prior to the expiration of the M2M terminal specific idle mode timer.

Furthermore, the method may be characterized in that the M2M terminal specific idle mode timer is received through a network (re)entry process or idle mode initiation process.

Furthermore, the method may be characterized in that the M2M terminal specific idle mode timer is received through a subscriber station basic capability response (SBC-RSP) message, a registration response (REG-RSP) message, a deregistration command (DREG-CMD) message, or a deregistration response (DREG-RSP) message.

Furthermore, according to the present disclosure, the method may further include entering an idle mode; and operating the M2M terminal specific idle mode timer subsequent to entering the idle mode.

Furthermore, according to the present disclosure, the method may further include transmitting a first message including at least one of mobility capability information indicating a mobility type of the terminal and traffic type information indicating a traffic pattern of the terminal to the base station.

Furthermore, the method may be characterized in that the M2M terminal specific idle mode timer is determined according to the first message.

Furthermore, the method may further include receiving a second message including location update type information indicating a location update type of the terminal from the base station.

Furthermore, the method may be characterized in that the location update type of the terminal is determined according to the first message.

Furthermore, the method may be characterized in that the first message and the second message are transmitted to the base station through a network (re)entry process or idle mode initiation process with the base station.

Furthermore, the method may be characterized in that the location update type is any one of no location update execution, a timer based location update, a timer based location update and location based update, and a location based update.

Furthermore, the method may be characterized in that the second message may further include an indicator indicating whether to perform a cell based location update or perform a paging group based location update when the location update type is a location based update.

Furthermore, the method may be characterized in that the step of performing a location update performs a location update according to the location update type information.

Furthermore, the method may be characterized in that the terminal specific idle mode timer is set to be greater than a cycle including an on-duration and an off-duration.

Furthermore, the method may be characterized in that the terminal is a machine-to-machine (M2M) or machine type communication (MTC) terminal.

Furthermore, the method may be characterized in that the mobility capability information indicates any one of no mobility, slow, medium, and fast.

Furthermore, the method may be characterized in that the traffic type information indicates any one of time controlled traffic, time tolerant traffic, and in-frequent traffic.

Furthermore, according to the present disclosure, there is provided a method of allowing a terminal to perform a location update in an idle mode in a wireless access system, and the method may include transmitting a first message including at least one of mobility capability information indicating a mobility type of the terminal and traffic type information indicating a traffic pattern of the terminal to the base station; receiving a second message including location update type information indicating a location update type of the terminal from the base station; and performing a location update based on the location update type information.

Furthermore, the method may be characterized in that the mobility capability information indicates any one of no mobility, slow, medium, and fast.

Furthermore, the method may be characterized in that the traffic type information indicates any one of time controlled traffic, time tolerant traffic, and in-frequent traffic.

Furthermore, the method may be characterized in that the location update type of the terminal is determined according to the first message.

Furthermore, the method may be characterized in that the first message or the second message is transmitted to the base station through a network (re)entry process or idle mode initiation process with the base station.

Furthermore, the method may further include receiving a terminal specific idle mode timer indicating a time interval performing a location update of the terminal from the base station, wherein the step of performing a location update periodically performs a location update prior to the expiration of the terminal specific idle mode timer.

Furthermore, the method may be characterized in that the terminal specific idle mode timer is received through a network (re)entry process or idle mode initiation process.

Furthermore, the method may be characterized in that the terminal specific idle mode timer is received through a deregistration command (DREG-CMD) message or a deregistration response (DREG-RSP) message.

Furthermore, the method may be characterized in that the location update type is any one of no location update execution, a timer based location update, a timer based location update and location based update, and a location based update.

Furthermore, the second message may further include an indicator indicating whether to perform a cell based location update or perform a paging group based location update when the location update type is a location based update.

Furthermore, the method may be characterized in that the terminal specific idle mode timer is set to be greater than a cycle including an on-duration and an off-duration.

Furthermore, according to the present disclosure, there is provided a terminal for performing a location update in an idle mode in a wireless access system, the terminal may include a wireless communication unit configured to transmit and/or receive a radio signal to and/or from the outside; and a controller connected to the wireless communication unit, wherein the controller controls the wireless communication unit to receive a machine-to-machine (M2M) terminal specific idle mode timer from the base station, and controls to perform a location update based on the received terminal specific idle mode timer, wherein the M2M terminal specific idle mode timer represents length of the maximum interval between location update while the terminal is in idle mode.

Furthermore, the terminal may be characterized in that the controller controls to perform a location update prior to the expiration of the M2M terminal specific idle mode timer.

Furthermore, the terminal may be characterized in that the M2M terminal specific idle mode timer is received through a network (re)entry process or idle mode initiation process.

Furthermore, the terminal may be characterized in that the terminal specific idle mode timer is received through a subscriber station basic capability response (SBC-RSP) message, a registration response (REG-RSP) message, a deregistration command (DREG-CMD) message, or a deregistration response (DREG-RSP) message.

Furthermore, the terminal may be characterized in that the controller controls to operate the M2M terminal specific idle mode timer subsequent to entering the idle mode.

Furthermore, the terminal may be characterized in that the controller controls the wireless communication unit to transmit a first message including at least one of mobility capability information indicating a mobility type of the terminal and traffic type information indicating a traffic pattern of the terminal to the base station.

Furthermore, the terminal may be characterized in that the controller controls the wireless communication unit to receive a second message including location update type information indicating a location update type of the terminal from the base station.

Furthermore, the terminal may be characterized in that the controller controls the terminal specific idle mode timer to be set to be greater than a cycle including an on-duration and an off-duration.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a flow chart illustrating the operation of an idle mode terminal;
FIG. 2 is a conceptual view illustrating a wireless communication system to which an embodiment of the present disclosure is applicable;
FIG. 3 is an interval block diagram illustrating a terminal and a base station in a wireless access system to which an embodiment of the present disclosure is applicable;
FIG. 4 is a flow chart illustrating a location update process in an idle mode according to an embodiment of the present disclosure;
FIG. 5 is a view illustrating that the period of an MTC terminal specific idle mode timer is set according to an embodiment of the present disclosure;
FIG. 6 is a flow chart illustrating a location update process in an idle mode according to another embodiment of the present disclosure;
FIGS. 7A and 7B are views illustrating location update types determined according to the mobility features and traffic patterns of an MTC terminal according to an embodiment of the present disclosure; and
FIG. 8 is a process of negotiating a location based update type of the MTC terminal and performing a location update of the MTC terminal in an idle mode through a network entry process according to an embodiment of the present disclosure.

### DETAILED DESCRIPTION OF THE INVENTION

The technology below will be used for various mobile communication systems such as CDMA (Code Division Multiple Access), FDMA (Frequency Division Multiple Access), TDMA (Time Division Multiple Access), OFDMA (Orthogonal Frequency Division Multiple Access), SC-FDMA (Single Carrier Frequency Division Multiple Access), or the like. CDMA can be implemented using a radio technology such as UTRA (Universal Terrestrial Radio Access) or CDMA2000. TDMA can be implemented using a radio technology such as GSM (Global System for Mobile communication)/GPRS (General Packet Radio Service)/EDGE (Enhanced Data Rates for GSM Evolution). OFDMA can be implemented using a radio technology such as IEEE 802.11 (Wi-Fi), IEEE 802.16 (WiMAX), IEEE 802.20, E-UTRA (Evolved UTRA), or the like. IEEE 802.16m is an evolution of IEEE 802.16e, and provides backward compatibility to an IEEE 802.16e-based system.

Furthermore, IEEE 802.16p provides communication standard for supporting machine type communication (MTC).

UTRA is part of UMTS (Universal Mobile Telecommunication System). 3GPP (3rd Generation Partnership Project) LTE (Long Term Evolution), as part of E-UMTS (Evolved UMTS) that uses Evolved-UMTS Terrestrial Radio Access (E-UTRA), employs OFDMA in the downlink and employs SC-FDMA in the uplink. LTE-A(LTE-Advanced) is an evolution of 3GPP LTE.

It should be noted that technological terms used herein are merely used to describe a specific embodiment, but not to limit the present invention. Also, unless particularly defined otherwise, technological terms used herein should be construed as a meaning that is generally understood by those having ordinary skill in the art to which the invention pertains, and should not be construed too broadly or too narrowly. Furthermore, if technological terms used herein are wrong terms unable to correctly express the spirit of the invention, then they should be replaced by technological terms that are properly understood by those skilled in the art. In addition, general terms used in this invention should be construed based on the definition of dictionary, or the context, and should not be construed too broadly or too narrowly.

Incidentally, unless clearly used otherwise, expressions in the singular number include a plural meaning. In this application, the terms "comprising" and "including" should not be construed to necessarily include all of the elements or steps disclosed herein, and should be construed not to include some of the elements or steps thereof, or should be construed to further include additional elements or steps.

The terms including an ordinal number such as first, second, etc. can be used to describe various elements, but the elements should not be limited by those terms. The terms are used merely for the purpose to distinguish an element from the other element. For example, a first element may be named to a second element, and similarly, a second element may be named to a first element without departing from the scope of right of the invention.

In case where an element is "connected" or "linked" to the other element, it may be directly connected or linked to the other element, but another element may be existed therebetween. On the contrary, in case where an element is "directly connected" or "directly linked" to another element, it should be understood that any other element is not existed therebetween.

Hereinafter, preferred embodiments of the present invention will be described in detail with reference to the accompanying drawings, and the same or similar elements are designated with the same numeral references regardless of the numerals in the drawings and their redundant description will be omitted. In describing the present invention, moreover, the detailed description will be omitted when a specific description for publicly known technologies to which the invention pertains is judged to obscure the gist of the present invention. Also, it should be noted that the accompanying drawings are merely illustrated to easily explain the spirit of the invention, and therefore, they should not be construed to limit the spirit of the invention by the accompanying drawings. The spirit of the invention should be construed as being extended even to all changes, equivalents, and substitutes other than the accompanying drawings.

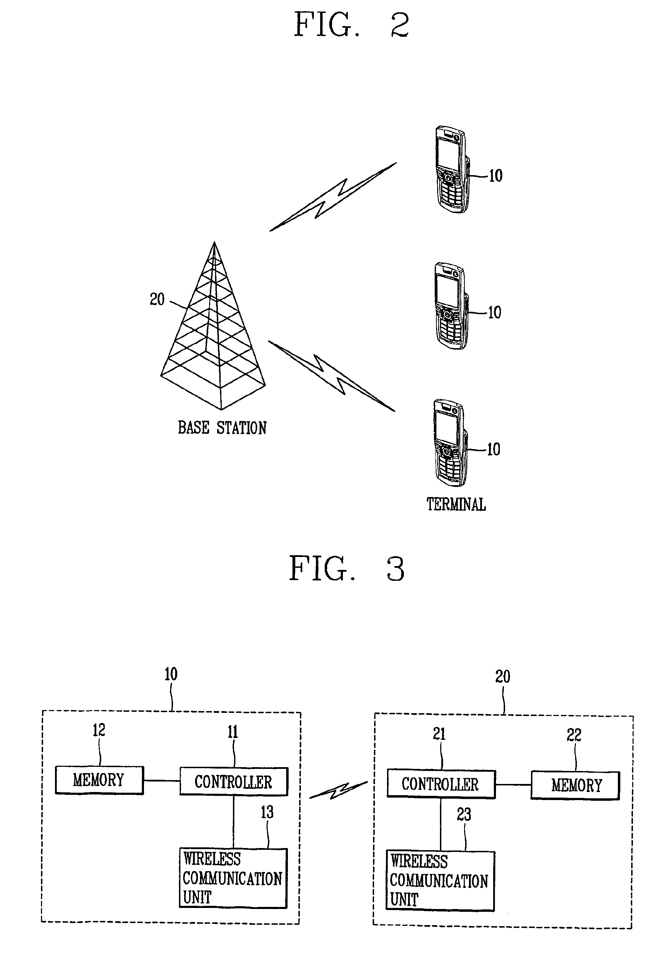

FIG. 2 is a conceptual view illustrating a wireless communication system to which an embodiment of the present disclosure is applicable. The wireless communication system may be widely disposed to provide various communication services such as voice, packet data.

Referring to FIG. 2, a wireless communication system may include a terminal (or mobile station (MS)) 10 and a base station (BS) 20. The terminal 10 may be fixed or have mobility, and may be also referred to as another term, such as user equipment (UE), user terminal (UT), subscriber station (SS), wireless device, advanced mobile station (AMS), and the like. Furthermore, the terminal 10 may include the concept of an MTC or M2M terminal.

The base station 20 typically refers to a fixed station for performing communication with the terminal 10, and may be also referred to as another term, such as NodeB, base transceiver system, access point, and the like. One or more cells may exist in one base station 20.

The wireless communication system may be an orthogonal frequency division multiplexing (OFDM)/orthogonal frequency division multiple access (OFDMA)-based system.

OFDM may use a plurality of orthogonal subcarriers. OFDM may use an orthogonal characteristic between inverse fast Fourier transform (IFFT) and fast Fourier transform (FFT). The transmitter may perform IFFT to transmit data. The receiver may perform FFT to restore original data. The transmitter may use IFFT to combine multiple subcarriers with one another, and the receiver may use the corresponding FFT to separate multiple subcarriers from one another.

FIG. 3 is an interval block diagram illustrating a terminal and a base station in a wireless access system to which an embodiment of the present disclosure is applicable.

A terminal 10 may include a controller 11, a memory 12, and a radio frequency (RF) unit 13.

Furthermore, the terminal may also include a display unit, a user interface unit, and the like.

The controller 11 implements the proposed functions, processes and/or methods. The layers of the radio interface protocol may be implemented by the controller 11.

The memory 12, which is connected to the controller 11, may store protocols or parameters for performing wireless communication. In other words, the memory 12 may store terminal-driving systems, applications, and general files.

The RF unit 13, which is connected to the controller 11, may transmit and receive radio signals.

Additionally, the display unit may display various information of the terminal, and well-known elements such as a liquid crystal display (LCD), organic light emitting diodes (OLED), or the like may be used. The user interface unit may be implemented in combination of well-known user interfaces such as a keypad, a touch screen, or the like.

A base station 20 may include a controller 21, a memory 22, and a radio frequency (RF) unit 23.

The controller 21 implements the proposed functions, processes and/or methods. The layers of the radio interface protocol may be implemented by the controller 21.

The memory 22, which is connected to the controller 21, may store protocols or parameters for performing wireless communication.

The RF unit 23, which is connected to the controller 21, may transmit and receive radio signals.

The controller 11, 21 may include application-specific integrated circuits (ASICs), other chip sets, logic circuit and/or data processing devices. The memory 12, 22 may include read-only memory (ROM), random access memory (RAM), flash memory, memory card, storage medium and/or other storage devices. The RF unit 13, 23 may include a baseband circuit for processing radio signals. When the embodiment is implemented by software, the foregoing technique may be implemented by a module (process, function, etc.) performing the foregoing function. The module may be stored in the memory 12, 22, and implemented by the controller 11, 21.

The memory 12, 22 may be located inside or outside the controller 11, 21, and may be connected to the controller, 11, 21 through well-known various means.

Hereinafter, a method for performing a location update of the idle mode terminal in a machine type communication (MTC) environment proposed by the present disclosure will be described in detail.

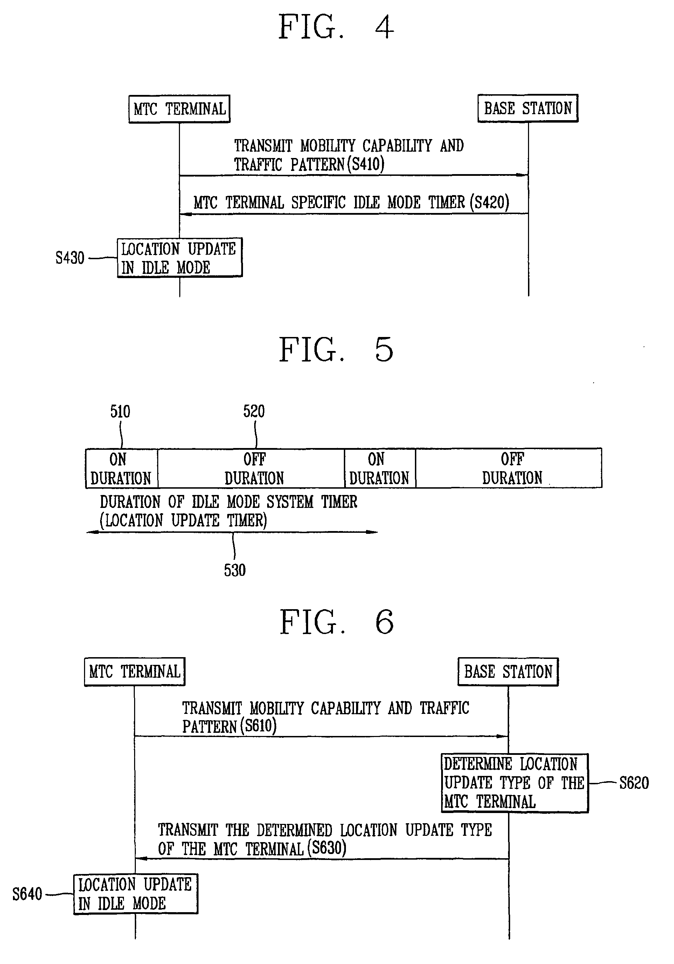

FIG. 4 is a flow chart illustrating a location update process in an idle mode according to an embodiment of the present disclosure.

First, an MTC terminal and a base station negotiate a mobility capability of the MTC terminal and an application type of the MTC terminal (or traffic pattern of the MTC terminal) through a network (re)entry process or idle mode initiation process.

In other words, the MTC terminal transmits a first message including at least one of mobility capability information indicating a mobility type of the terminal itself and traffic type information indicating a traffic pattern of the terminal itself to the base station (S410).

Here, the first message is a subscriber station basic capability request/response (SBC-REQ/RSP) message or registration request/response (REG-REQ/RSP) message in case of being transmitted through a network re(entry) process, and a deregistration command (DREG-REQ) message in case of being transmitted through an idle mode initiation process.

The mobility capability information of the MTC terminal may be information indicating a mobility (or speed) type of the MTC terminal, indicating any one of no mobility, slow, medium, and fast.

Here, an example of this is "slow", indicating that the mobile speed of an MTC terminal may be 0-10 km/h.

Furthermore, an example of this is "fast", indicating that the mobile speed of an MTC terminal may be above 120 km/h.

The following Table 1 illustrates an example of the mobility capability information of the MTC terminal.

**[Table 1]**

| Field | Value/Distribution | Condition |
|---|---|---|
| Mobility | Used to indicate the mobility type of M2M device | Can be present in AAI_SBC-REQ/RSP, AAI_REG-REQ/RSP or can be signaled during network (re)entry or can be signaled at idle mode initiation procedure |
| capability | 00: no mobility | |
| | 01: Slow (0-10km/h) | |
| | 10: Medium | |
| | 11: Fast (above 120km/h) | |

Furthermore, the application type information of the MTC terminal may be information indicating a traffic pattern of the MTC terminal, indicating any one of time controlled traffic, time tolerant traffic, and in-frequent traffic.

The following Table 2 illustrates an example of the application type information of the MTC terminal.

**[Table 2]**

| Field | Value/Distribution | Condition |
|---|---|---|
| Traffic | Used to indicate the traffic pattern of M2M device | Can be present in AAI_SBC-REQ/RSP, AAI_REG-REQ/RSP or can be signaled during network |
| pattern | 00: Time controlled traffic | |
| | 01: Time tolerant traffic | |
| | 10: In-frequent traffic | (re)entry |
| | 11: Reserved | |

Then, the base station transmits the MTC (or M2M) terminal specific idle mode timer to the MTC terminal based on mobility capability information and traffic pattern information received from the MTC terminal (S420).

Here, the MTC terminal specific idle mode timer may refer to information indicating a time interval allowing the MTC terminal to perform a location update. For example, it may indicate a length of the maximum interval between location updates while the MTC terminal is in an idle mode.

Furthermore, the MTC terminal specific idle mode timer may be explicitly transmitted to the MTC terminal through a network (re)entry process or idle mode initiation process. In other words, an SBC-RSP or REG-RSP message may be used when the base station transmits the MTC terminal specific idle mode timer through the network (re)entry process.

Alternatively, a DREG-RSP message may be used when the base station transmits the MTC terminal specific idle mode timer through the idle mode initiation process.

The following Table 3 illustrates an example of the message format including an MTC terminal specific idle mode timer.

**[Table 3]**

| Field | Value/Distribution | Condition |
|---|---|---|
| Idle mode timer | M2M device timed interval to conduct location update. Timer recycles on successful idle mode location update. | Can be present in AAI_SBC- RSP, AAI_REG- RSP or can be signaled during network (re)entry or can be signaled at idle mode initiation procedure. |

Furthermore, for the MTC terminal having a time controlled traffic feature, the base station may transmit the MTC terminal specific idle mode timer by setting it to be greater than a cycle including an on-duration and an off-duration.

As illustrated in FIG. 5, when the MTC terminal receives an MTC terminal specific idle mode timer 530 to which a value greater than a cycle including an on-duration 510 and an off-duration 520 is assigned from the base station, the MTC terminal does not perform a timer based location update.

Since the MTC terminal transmits UL traffic to the base station during the on-duration interval to reset an idle mode timer of the MTC terminal, the MTC terminal may not be required to perform a timer based update.

Accordingly, a period of the MTC terminal idle mode timer having a time controlled traffic feature is set as described above in an MTC environment not to perform a timer based update, thereby reducing a burden on the location update of the MTC terminal (time controlled traffic).

Then, the MTC terminal performs a location update in an idle mode based on the received MTC terminal specific idle mode timer (S430).

Here, the MTC terminal performs a location update prior to the expiration of the received MTC terminal specific idle mode timer.

FIG. 6 is a flow chart illustrating a location update process in an idle mode according to another embodiment of the present disclosure.

The step S610 is similar to the step S410 of FIG. 4, and thus the description thereof will be omitted, and only different portions will be described in detail.

Subsequent to the step S610, the base station determines a location update type of the MTC terminal in a network based on a first message received from the MTC terminal, namely, the mobility capability information and traffic type of the MTC terminal (S620).

Here, the location update type of the MTC terminal may be determined through a network (re)entry process or idle mode initiation process.

Here, the location update type may be any one of no location update execution, a timer based location update, a timer based location update and location based update, and a location based update.

The following Table 4 illustrates an example of the location update type.

**[Table 4]**

| Field | Value/Distribution | Condition |
|---|---|---|
| Location update type | Used to indicate the Location Update type of M2M device 00: No Location update 01: Timer based location update 10: Timer based location update and location based update 11: location based update | Can be present in AAI_SBC-REQ/RSP, AAI-REG-REQ/RSP or can be signaled during network (re)entry or can be signaled at idle mode initiation procedure |

Furthermore, the following Table 5 illustrates another example of the location update type format.

**[Table 5]**

| Field | Value/Distribution | Condition |
|---|---|---|
| Location update type | Used to indicate the Location Update type of M2M device 00: No Location update 01: Support Location update | Can be present in AAI_SBC-REQ/RSP, AAI_REG-REQ/RSP or can be signaled during network (re)entry or can be signaled at idle mode initiation procedure |

Referring to the above Table 5, when the location update type is set to '01', the MTC terminal may perform a location update supported by the system or terminal, such as a timer based location update, a location based update, a power down update, and the like, either periodically or on event occurrence.

The base station may determine a location update type of the MTC terminal in an idle mode by considering mobility capability information and traffic pattern information received from the MTC terminal.

### 1. Fixed mobility

(1) In case of a time controlled traffic pattern, the location update type of the MTC terminal may be determined as no location update. It is because the MTC terminal does not require a location update process due to a periodical UL report of the MTC terminal.
(2) In case of a non-time controlled traffic pattern, the location update type of the MTC terminal may be determined only as a timer based location update. It is because there is no location update region.

### 2. Low mobility

(1) In case of a time controlled traffic pattern, the location update type of the MTC terminal may be determined as no location update. It is because the MTC terminal does not require a location update process due to a periodical UL report of the MTC terminal.
(2) In case of a non-time controlled traffic pattern, the location update type of the MTC terminal may be determined as a timer based location update, a location based update, or an event triggered update.

Here, the unit of a location update may be a cell in case of a location based update, and may be a location update initiated by the base station through a paging message in case of an event triggered location update.

### 3. High mobility

(1) In case of a time controlled traffic pattern, the location update type of the MTC terminal may be determined as no location update. It is because the MTC terminal does not require a location update process due to a periodical UL report of the MTC terminal.
(2) In case of a non-time controlled traffic pattern, the location update type of the MTC terminal may be determined as a timer based location update, a location based update, or an event triggered update.

Here, the unit of a location update may be a paging group in case of a location based update.

Furthermore, it may be a location update initiated by the base station through a paging message in case of an event triggered update.

Then, the base station transmits a second message including the above determined location update type information (S630).

Here, the second message may further include an indicator indicating whether the location update of the MTC terminal is carried out on a cell basis or paging group basis when the location update type of the MTC terminal is determined as a location based update.

In other words, when the location update type of the MTC terminal is determined as a location based update upon receiving mobility capability information and traffic feature information, the base station transmits an indicator indicating whether MTC terminal perform a location based update on a cell basis or perform a location update on a paging group basis to the MTC terminal through the second message.

Here, the second message may be transmitted through a network re(entry) process or idle mode initiation process as in the first message.

In other words, the second message may be a subscriber station basic capability response (SBC-RSP) message or registration request/response (REG-REQ/RSP) message in case of being transmitted through a network re(entry) process, and may be a deregistration request (DREG-REQ) message in case being transmitted through an idle mode initiation process.

For example, when the location update type is set to '01' in the above Table 4, a timer value for location update may be included in the SBC-RSP, REG-RSP or DREG-RSP message.

Furthermore, when the location update type is set to '10' or '11' in the above Table 4, a timer value for location update may be included in the SBC-RSP, REG-RSP or DREG-RSP message, and the base station may transmit a location based update type (i.e., the indicator) therewith to the MTC terminal.

For example, the indicator (location based update type) indicates a cell based update when the indicator is set to '0', and indicates a paging group based update when the indicator is set to '1'.

Furthermore, the indicator may be included in the SBC-RSP, REG-RSP or DREG-RSP message to be transmitted to the MTC terminal.

The following Table 6 illustrates an example of the location based update type format.

**[Table 6]**

| Field | Value/Distribution | Condition |
|---|---|---|
| Location based update type | 0: Cell based update When moved to a different cell, location update is carried out. 1: Paging group based update When moved to a different paging group, location update is carried out. | When the location update type is 10 or 11, this field is present. Can be present in AAI_SBC-RSP, AAI_REG- RSP or can be signaled during network (re)entry or can be signaled at idle mode initiation procedure |

Referring to the above Table 6, in case where the location based update type (the indicator) is set to '0', the MTC terminal performs a location update in an idle mode when moved to a different cell.

Furthermore, in case where the location based update type (the indicator) is set to '1', the MTC terminal performs a location update in an idle mode when moved to a different paging group.

Then, the MTC terminal performs a location update prior to the expiration of the MTC terminal specific idle mode timer based on the received location update type information (S640).

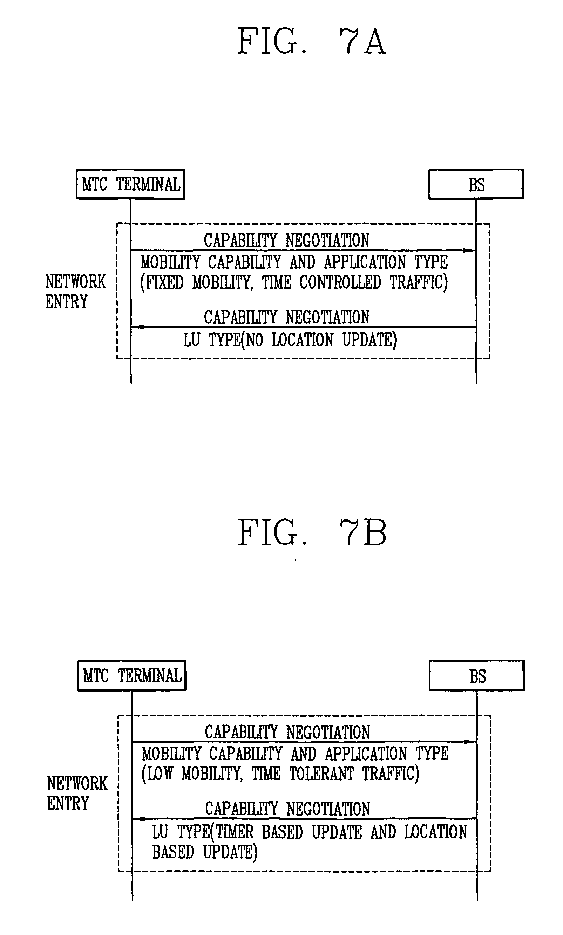

FIGS. 7A and 7B are views illustrating location update types determined according to the mobility features and traffic patterns of an MTC terminal according to an embodiment of the present disclosure.

First, FIG. 7A illustrates that the location update type of the MTC terminal is determined as no location update when the mobility feature of the MTC terminal is no mobility and the traffic pattern thereof is time controlled traffic.

On the contrary, FIG. 7B illustrates that the location update type of the MTC terminal is determined as a timer based update and location based update when the mobility feature of the MTC terminal is low mobility and the traffic pattern thereof is time tolerant traffic.

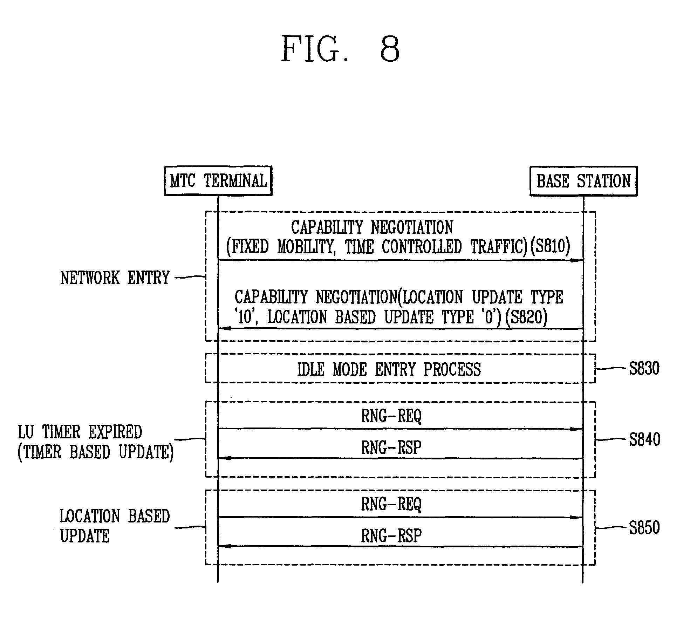

FIG. 8 is a process of negotiating a location based update type of the MTC terminal and performing a location update of the MTC terminal in an idle mode through a network entry process according to an embodiment of the present disclosure.

Referring to FIG. 8, the MTC terminal transmits mobility capability information indicating no mobility and traffic pattern information indicating a time controlled traffic feature to the base station through a network entry process (S810).

Then, the base station transmits timer and location based location update type information and location based update type information indicating that the location based update is a cell based location update to the MTC terminal, based on the information received in the step S81 0 (S820).

In other words, when the base station determines the location update type of the MTC terminal as '10' or '11' in the above Table 4, an indicator indicating a location based update type, namely, location based update type information, is transmitted to the MTC terminal.

As illustrated in the above Table 4, it indicates a cell based update when the location based update type information is set to '0', and indicates a paging group based update when the location based update type information is set to '1'.

Furthermore, it indicates a timer based update and location based update when the location update type information is set to '10', and indicates a location based update when the location update type information is set to '11'.

Then, the MTC terminal enters an idle mode by transmitting and/or receiving a deregistration request and response (DREG-REQ/RSP) message to and/or from the base station (S830).

Then, the MTC terminal performs a timer based location update when a location update timer is expired in an idle mode (S840), or performs a location based update when it is detected that the MTC terminal has been moved to another cell from a current cell (S850). As illustrated in FIG. 8, the MTC terminal transmits and/or receive a ranging request/response (RNG-REQ/RSP) message to and/or from the base station to perform a location update.

### Second embodiment

Hereinafter, a power down location update of the idle mode terminal will be described in an MTC environment.

### 1. Power down with reporting

The MTC terminal performs a location update to a paging controller prior to power-down.

In case where the MTC terminal successfully performs a power down location update, the paging controller releases all idle mode retaining information associated with the MTC terminal.

### 2. Power down without reporting

In case where the paging controller notifies paging in a paging region, and the paging controller does not receive a response to the paging from the MTC terminal until the paging retry count is expired, the paging controller releases all idle mode retaining information associated with the MTC terminal. The paging controller reports 'abnormal power down' to the MTC server, and the MTC server reports an 'abnormal power down' event to the MTC operator. Here, the MTC operator may repair an abnormally powered down MTC server.

## Claims

1. A method of allowing a terminal to perform a location update in an idle mode in a wireless access system, the method comprising:
receiving, from a base station, a machine-to-machine (M2M) terminal specific idle mode timer; and
performing a location update based on the received M2M terminal specific idle mode timer,
wherein the M2M terminal specific idle mode timer represents length of the maximum interval between location update while the terminal is in idle mode.

2. The method of claim 1, wherein said performing a location update periodically performs a location update prior to the expiration of the M2M terminal specific idle mode timer.

3. The method of claim 1, wherein the M2M terminal specific idle mode timer is received through a network (re)entry process or idle mode initiation process.

4. The method of claim 3, wherein the M2M terminal specific idle mode timer is received through a subscriber station basic capability response (SBC-RSP) message, a registration response (REG-RSP) message, a deregistration command (DREG-CMD) message, or a deregistration response (DREG-RSP) message.

5. The method of claim 1, further comprising:
entering an idle mode; and
operating the M2M terminal specific idle mode timer subsequent to entering the idle mode.

6. The method of claim 1, further comprising:
transmitting, to the base station, a first message including at least one of mobility capability information indicating a mobility type of the terminal and traffic type information indicating a traffic pattern of the terminal.

7. The method of claim 6, further comprising:
receiving, from the base station, a second message comprising location update type information indicating a location update type of the terminal.

8. The method of claim 6 or 7, wherein the first message and the second message are transmitted to the base station through a network (re)entry process or idle mode initiation process.

9. The method of claim 7, wherein the location update type is any one of no location update execution, a timer based location update, a timer based location update and location based update, and a location based update.

10. The method of claim 7, wherein the second message may further comprise an indicator indicating whether to perform a cell based location update or perform a paging group based location update when the location update type is a location based update.

11. The method of claim 1, wherein the M2M terminal specific idle mode timer is set to be greater than a cycle including an on-duration and an off-duration.

12. The method of claim 6, wherein the mobility capability information indicates any one of no mobility, slow, medium, and fast.

13. The method of claim 6, wherein the traffic type information indicates any one of time controlled traffic, time tolerant traffic, and in-frequent traffic.

14. A terminal for performing a location update in an idle mode in a wireless access system, the terminal comprising:
a wireless communication unit configured to transmit and/or receive a radio signal to and/or from the outside; and
a controller connected to the wireless communication unit,
wherein the controller controls the wireless communication unit to receive a machine-to-machine (M2M) terminal specific idle mode timer from the base station, and controls to perform a location update based on the received M2M terminal specific idle mode timer,
wherein the M2M terminal specific idle mode timer represents length of the maximum interval between location update while the terminal is in idle mode.

15. The terminal of claim 14, wherein the controller controls to perform a location update prior to the expiration of the M2M terminal specific idle mode timer.
